# EUROPEAN PATENT APPLICATION

(11) **EP 4 489 121 A1**
(43) Date of publication of application: **08.01.2025**
(21) Application number: 23763131.2
(22) Date of filing: 17.01.2023
(51) Int. Cl.: H01M 4/38, C01B 33/02, C01B 33/26, H01M 4/36, H01M 4/62

(54) **LITHIUM ION SECONDARY BATTERY NEGATIVE ELECTRODE ACTIVE MATERIAL, METHOD FOR PRODUCING SAME, AND LITHIUM ION SECONDARY BATTERY NEGATIVE ELECTRODE**

(30) Priority: 03.03.2022 JP 2022032241
(71) Applicant: Japan Metals and Chemicals Co., Ltd., Tokyo 103-0025 (JP)
(72) Inventor: ARUGA Yuta, Nishiokitama-gun, Yamagata 999-1351 (JP); WATANABE Yusuke, Nishiokitama-gun, Yamagata 999-1351 (JP); MIYAWAKI Toshimasa, Nishiokitama-gun, Yamagata 999-1351 (JP); KISHIGAMI Fumiya, Nishiokitama-gun, Yamagata 999-1351 (JP); SAITOH Yuki, Nishiokitama-gun, Yamagata 999-1351 (JP); OSAWA Masahito, Nishiokitama-gun, Yamagata 999-1351 (JP)
(74) Representative: Hoffmann Eitle
(86) International application number: PCT/JP2023/001107
(87) International publication number: WO 2023/166869

(57) **Abstract**

Provided is a lithium ion secondary battery negative electrode active material capable of suppressing decrease in discharge capacity retention ratio (cycle characteristic) even after repeating charge and discharge. The lithium ion secondary battery negative electrode active material is a composite with silicon particles being dispersed in a matrix that contains a lithium aluminosilicate having a three-dimensional network structure, wherein the lithium aluminosilicate is represented by the following general formula (1):

LiAlₓSi_{y}O_{1/2 + 3x/2 + 2y + δ} · · · (1)

, wherein in the general formula (1), x satisfies 0.4≤x≤2.5, y satisfies 0.4≤y≤6.8, and δ satisfies -0.4≤δ≤0.4.

## Description

### Technical field

The present invention relates to a lithium ion secondary battery negative electrode active material, a method for producing the same, and a lithium ion secondary battery negative electrode. More specifically, the invention relates to a lithium ion secondary battery negative electrode active material that is superior in cycle characteristic and has silicon particles dispersed in a lithium aluminosilicate forming a three-dimensional network structure; a method for producing such active material; and a lithium ion secondary battery negative electrode.

### Background art

Secondary batteries are now widely used in, for example, cell phones, personal computers, electric power tools, hybrid electric vehicles (HEV), and plug-in electric vehicles (PEV). In particular, lithium ion batteries have high outputs and high energy densities, and have widely prevailed as batteries for portable devices and as in-vehicle batteries. Graphite materials are mainly used as the negative electrode active materials in lithium ion batteries. While a lithium ion battery negative electrode that employs a graphite material as a negative electrode active material has a favorable cycle characteristic, its charging capacity is about 372 (mA·h/g) which is relatively small.

In recent years, lithium ion batteries are required to exhibit even higher energy densities, partly because of the increasing demand thereof as in-vehicle batteries. In order to improve the energy density of a lithium ion battery, charging capacity needs to be improved via a negative electrode active material contained in the negative electrode of the lithium ion battery. Based on this perspective, what has gained attention is a silicon-based negative electrode that uses, as a negative electrode active material, a silicon material having a charging capacity of 4,200 (mA·h/g) which is 10 times the charging capacity of a graphite material or larger, and research and development is being actively conducted on such type of negative electrode.

What has been put into practical use as a silicon-based negative electrode are a Si negative electrode solely composed of pure silicon; and a SiO negative electrode composed of SiO which is a mixture of Si and SiO₂. Here, the SiO negative electrode has a structure in which silicon is dispersed in a silicon oxide. The SiO negative electrode is superior to the Si negative electrode solely composed of elemental silicon in cycle characteristic because the silicon oxide can suppress the expansion and contraction of silicon. However, the SiO negative electrode is such that at the time of initial charging, the silicon oxide will react with lithium to produce Li₄SiO₄ as a side reaction product, whereby an impaired coulombic efficiency will be observed. Thus, a Li-Si-O-based negative electrode with the SiO negative electrode previously doped with lithium is also currently under development. However, the Li-Si-O-based negative electrode still has a technical problem in that it is inferior to a graphite-based negative electrode in cycle characteristic.

Patent Literature 1 discloses a silicon-silicon oxide-lithium composite that is considered as useful as a lithium ion secondary battery negative electrode active material; a method for producing such composite; and a non-aqueous electrolyte secondary cell negative electrode material using such powder. The lithium ion secondary battery negative electrode active material disclosed in Patent Literature 1 has a structure in which silicon is dispersed in a silicon oxide, and the silicon oxide is doped with lithium.

Patent Literature 2 discloses a lithium ion secondary battery negative electrode. The lithium ion secondary battery negative electrode described in Patent Literature 2 contains SiO₂ and LiAlO₂, and contains Li₄SiO₄ and Al formed after initial lithium charging.

Patent Literature 3 discloses a negative electrode active material for non-aqueous electrolyte secondary batteries that comprises lithium silicate composite particles including a lithium silicate phase and silicon particles dispersed in the lithium silicate phase. According to the descriptions in Patent Literature 3, the lithium silicate phase included in the lithium silicate composite particles of the disclosed negative electrode active material for non-aqueous electrolyte secondary batteries is an oxide phase including Li, Si, O, and M (M is an element other than the following elements: group 1 elements of alkali metals, group 16 elements of oxygen group, group 18 elements of rare gas, and Si).

### Citation List

### Patent Literature

Patent Literature 1: JP-A-2007-294423
Patent Literature 2: JP-A-2013-197012
Patent Literature 3: WO2019/130787

### Non-Patent Literatures

Non-Patent Literature 1: Inorg. Mater., 1987, 23, 1835-1837, Atdaev B.S., Grin'V.F., Sal'kov E.A., Chalaya.V.G.
Non-Patent Literature 2: Russ. J. Inorg. Chem., 1986, 31, 503-506, Kosorukov A.A., Nadel L.G., Chirkov A.S.

### Summary of Invention

### Technical Problem

However, the above conventional techniques have the following problems. While the silicon-silicon oxide-lithium composite disclosed in Patent Literature 1 that is considered as useful as a lithium ion secondary battery negative electrode active material has the structure in which silicon is dispersed in the silicon oxide, the components in the silicon oxide are Li, Si, and O, where Al is not contained as its component. Thus, the silicon oxide is not a Li-Al-Si-O-based compound.

Further, as for the lithium ion secondary battery negative electrode disclosed in Patent Literature 2, since SiO₂ and LiAlO₂ are contained therein, the negative electrode contains Al as a negative electrode active material. However, this negative electrode merely contains SiO₂ and LiAlO₂ as individual components and does not contain a Li-Al-Si-O-based compound. Moreover, this lithium ion secondary battery negative electrode contains Li₄SiO₄ and Al as Li₄SiO₄ is formed after initial lithium charging.

In addition, the lithium silicate phase included in the lithium silicate composite particles of the negative electrode active material disclosed in Patent Literature 3 for non-aqueous electrolyte secondary batteries contains Li, Si, O, and M that is defined as an element covering a wide range (M is an element other than the following elements: group 1 elements of alkali metals, group 16 elements of oxygen group, group 18 elements of rare gas, and Si), which indicates that the lithium silicate phase is not of a compositional design targeted at a specific compound having a three-dimensional network structure. This shows that a three-dimensional network structure cannot be the main phase of the matrix.

As described above, none of the lithium ion secondary battery negative electrode active materials and so on disclosed in Patent Literatures 1 to 3 employs a Li-Al-Si-O-based compound having a three-dimensional network structure as the main phase. For this reason, as for the negative electrode materials disclosed in Patent Literatures 1 to 3 that each contain a lithium ion secondary battery negative electrode active material and silicon particles, the silicon particles will collapse as they expand and contract with the storing and releasing of lithium. As a result, a lithium ion secondary battery equipped with a negative electrode containing any of the negative electrode active materials disclosed in Patent Literatures 1 to 3 has a problem of exhibiting a decreased discharge capacity retention ratio (cycle characteristic) as the charging/discharging capacity of the battery decreases every time charging and discharging is repeated.

The present invention was made in view of the problems borne by these conventional techniques. It is an object of the present invention to provide a lithium ion secondary battery negative electrode active material capable of suppressing decrease in discharge capacity retention ratio (cycle characteristic) even after repeating charge and discharge, by suppressing the collapse of silicon particles as they expand and contract with the storing and releasing of lithium; a method for producing such active material; and a lithium ion secondary battery negative electrode.

### Solution to Problem

The lithium ion secondary battery negative electrode active material as the objective of the present invention is a composite with silicon particles being dispersed in a matrix whose main phase is a lithium aluminosilicate having a three-dimensional network structure. Further, in order to achieve the above object, the inventors of the present invention arrived at the invention by making the following findings. That is, the inventors found that by employing a lithium aluminosilicate with a three-dimensional network structure that is represented by the following general formula (1) as the matrix for dispersing the silicon particles contained in the lithium ion secondary battery negative electrode active material, both the discharge capacity characteristic and charge/discharge capacity retention ratio of the lithium ion secondary battery negative electrode active material can be secured in a well-balanced manner, and a favorable cycle characteristic is also exhibited if used in an in-vehicle lithium ion secondary battery.

Specifically, a first aspect of the present invention is to provide a lithium ion secondary battery negative electrode active material that is a composite with silicon particles being dispersed in a matrix whose main phase is a lithium aluminosilicate having a three-dimensional network structure, wherein the lithium aluminosilicate is represented by the following general formula (1):
[Chemical formula 1]

LiAlₓSi_{y}O_{1/2 + 3x/2 + 2y + δ} · · · (1)

wherein in the general formula (1), x satisfies 0.4≤x≤2.5, y satisfies 0.4≤y≤6.8, and δ satisfies -0.4≤δ≤0.4.

Here, with regard to such lithium ion secondary battery negative electrode active material, the following resolutions are, for example, considered as preferrable:
(a) in the general formula (1), a ratio (y/x) which is a ratio between Si and Al is in a range of 1.0≤(y/x)≤5.5;
(b) the lithium aluminosilicate is at least one selected from LiAlSiO₄, LiAlSi₂O₆, and LiAlSi₃O₈;
(c) in a crystal structure analysis conducted by an X-ray diffraction method specified in JIS H7805:2005, the lithium aluminosilicate has peaks of 28.20 to 28.60, 47.10 to 47.50, and 55.90 to 56.30 as diffraction peaks 2θ (deg) attributable to silicon; and peaks of 25.10 to 25.90, 47.10 to 47.90, and 55.80 to 56.80 as diffraction peaks 2θ (deg) attributable to lithium aluminosilicate;
(d) the silicon particles are contained in the lithium ion secondary battery negative electrode active material at a ratio of 40 to 90% by mass;
(e) the silicon particles have an average particle size of 5 to 100 nm.

A second aspect of the present invention is to provide a method for producing a lithium ion secondary battery negative electrode active material with silicon particles being dispersed in a matrix that contains a lithium aluminosilicate having a three-dimensional network structure. This method includes:
a step (I) of producing a lithium aluminosilicate having a three-dimensional network structure by mixing and crushing lithium carbonate, aluminum hydroxide, and silicon dioxide, and then by performing sintering at a temperature of 800 to 1,000°C under an atmospheric pressure atmosphere;
a step (II) of producing a negative electrode active material precursor by mixing and crushing the lithium aluminosilicate produced in the step (I) and silicon particles; and
a step (III) of sintering the negative electrode active material precursor produced in the step (II) under an inert gas atmosphere,

wherein the lithium aluminosilicate is represented by the following general formula (1):
   [Chemical formula 2]

   LiAlₓSi_{y}O_{1/2} + 3x/2 + 2y + δ · · · (1)
wherein in the general formula (1), x satisfies 0.4≤x≤2.5, y satisfies 0.4≤y≤6.8, and δ satisfies -0.4≤δ≤0.4.

A third aspect of the present invention is to provide a lithium ion secondary battery negative electrode including the above lithium ion secondary battery negative electrode active material.

### Advantageous Effects of Invention

The lithium ion secondary battery negative electrode active material of the present invention and a secondary battery negative electrode containing such lithium ion secondary battery negative electrode active material are superior in discharge capacity characteristic and discharge capacity retention ratio (cycle characteristic). Thus, with the present invention, there can be obtained a smaller and lighter lithium ion secondary battery; and by installing such lithium ion secondary battery in cell phones, personal computers, electric power tools, hybrid vehicles (HEV), and electric vehicles (PEV), there can be provided products with high kinematic performances.

### Brief Description of Drawings

[Fig. 1] is a model diagram showing a three-dimensional network structure of LiAlSiO₄ composing the lithium ion secondary battery negative electrode active material of the present invention.
[Fig. 2] is a model diagram showing a three-dimensional network structure of LiAlSi₂O₆ composing the lithium ion secondary battery negative electrode active material of the present invention.
[Fig. 3] is a model diagram showing a three-dimensional network structure of LiAlSi₃O₈ composing the lithium ion secondary battery negative electrode active material of the present invention.
[Fig. 4] is a flowchart showing the steps of a method for producing the lithium ion secondary battery negative electrode active material of the present invention.
[Fig. 5] is a set of graphs showing measurement results of X-ray diffractometry (XRD) performed on a composite (before charging and discharging secondary battery) of LiAlSiO₄ and Si (silicon particles) that composes the lithium ion secondary battery negative electrode active material of the present invention.
[Fig. 6] is a set of graphs showing measurement results of X-ray diffractometry (XRD) performed on a composite (after charging and discharging secondary battery) of LiAlSiO₄ and Si (silicon particles) that composes the lithium ion secondary battery negative electrode active material of the present invention.
[Fig. 7] shows diffraction pattern measurement results of X-ray diffractometry (XRD) performed on a lithium aluminosilicate produced in Example 1, where Fig.7(a) is an actually measured XRD profile of the lithium aluminosilicate produced in Example 1, and Fig. 7(b) is a reference XRD profile showing known diffraction peaks of LiAlSiO₄.
[Fig. 8] is a model diagram showing the structure of a secondary battery equipped with a negative electrode containing the lithium ion secondary battery negative electrode active material of the present invention.
[Fig. 9] shows diffraction pattern measurement results of X-ray diffractometry (XRD) performed on a lithium aluminosilicate produced in Comparative Example 1, where Fig. 9(a) is an actually measured XRD profile of the lithium aluminosilicate produced in Comparative Example 1, and Fig. 9(b) is a reference XRD profile showing known diffraction peaks of Li₂Si₂O₅.
   There are shown diffraction pattern measurement results of X-ray diffractometry (XRD) performed on the lithium aluminosilicate obtained in Comparative Example 1.
[Fig. 10] is a graph showing a correlation between charge/discharge cycle and discharge capacity retention ratio (cycle characteristic) in a secondary battery equipped with a negative electrode containing the lithium ion secondary battery negative electrode active material of the present invention.

### Description of Embodiments

### [First Embodiment]

A lithium ion secondary battery negative electrode active material of a first embodiment is described. The lithium ion secondary battery negative electrode active material of this embodiment is characterized in that it is a composite with silicon particles being dispersed in a matrix whose main phase is a lithium aluminosilicate having a three-dimensional network structure. That is, the matrix composing the lithium ion secondary battery negative electrode active material of this embodiment employs a lithium aluminosilicate having a three-dimensional network structure as its main phase. Here, "main phase" refers to a state where a lithium aluminosilicate having a three-dimensional network structure is contained in the matrix at a ratio of 50 mol% or more. Further, "main phase" may refer to a state where the matrix composing the lithium ion secondary battery negative electrode active material of this embodiment is only composed of a lithium aluminosilicate having a three-dimensional network structure, i.e., a state where a lithium aluminosilicate having a three-dimensional network structure is contained in the matrix at a ratio of 100 mol%.

The lithium aluminosilicate having a three-dimensional network structure, as the matrix composing the lithium ion secondary battery negative electrode active material of this embodiment, is represented by the following general formula (1).
[Chemical formula 3]

LiAlₓSi_{y}O_{1/2 + 3x/2 + 2y + δ} · · · (1)

Here, in the general formula (1), x satisfies 0.4≤x≤2.5; y satisfies 0.4≤y≤6.8; δ means oxygen non-stoichiometry and satisfies -0.4≤δ≤0.4. In the general formula (1), x and y may be independently identical to or different from each other. Further, in the general formula (1), it is preferable when x is 0.5 or larger, because sufficient Al-Si-O bonds can be formed in terms of three-dimensional network structure formation. It is preferable when x is 1.2 or smaller, because Al will not inhibit the movement of lithium ions (Li⁺) in terms of lithium ion (Li⁺) conductivity. Moreover, it is preferable when y is 0.5 or larger, because sufficient Al-Si-O bonds can be formed in terms of three-dimensional network structure formation. It is preferable when y is 5.5 or smaller, because generation of SiO₂ capable of reacting with lithium (Li) at the time of charge and discharge can be suppressed in terms of initial efficiency. δ means oxygen non-stoichiometry in a metal oxide. When δ is not smaller than -0.4 and not larger than 0.0, it is a possible value in terms of oxygen deficiency involving oxygen vacancy; and when δ is not smaller than 0.0 and not larger than 0.4, it is a possible value in terms of oxygen excess caused by the introduction of interstitial oxygen or metal deficiency.

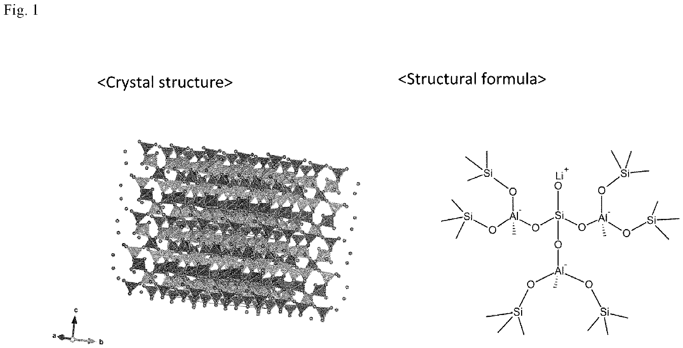

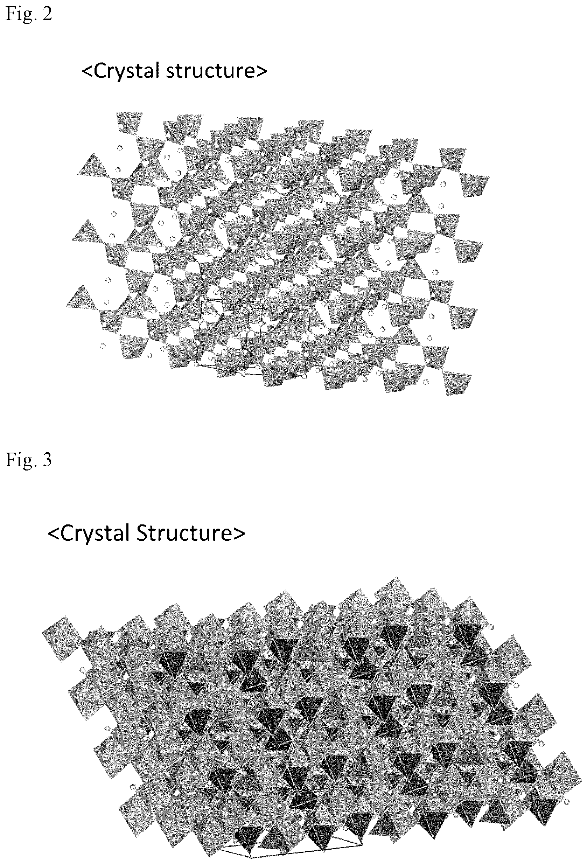

Figs.1 to 3 are model diagrams showing the microstructure(s) of the lithium aluminosilicate as the matrix of the lithium ion secondary battery negative electrode active material. Fig. 1 is a model diagram showing the microstructure of LiAlSiO₄ and the structural formula thereof; Fig. 2 is a model diagram showing the microstructure of LiAlSi₂O₆; and Fig. 3 is a model diagram showing the microstructure of LiAlSi₃O₈. In each of the lithium aluminosilicates shown in Figs.1 to 3, covalent bonds are formed among the atoms Al-Si-O, networks (three-dimensional network structure) are formed among these atoms, covalent bonds are present at a high ratio, and a branched structure is established. The three-dimensional network structure mentioned here refers to a structure where elements other than lithium as movable ions are three-dimensionally bonded via covalent bonds. Lithium ions are capable of freely moving in the Li-Al-Si-O compound at the time of charge and discharge reaction. By allowing elements other than lithium to bond together in a way such that a three-dimensional structure is formed without lithium intervening, there can be expected an effect of improving strength due to the three-dimensional network structure of the lithium aluminosilicate while maintaining the lithium ion conductivity. For example, as the matrix for dispersing the silicon particles contained in the lithium ion secondary battery negative electrode active material of this embodiment, there can be listed LiAlSiO₄, LiAlSi₂O₆, and LiAlSi₃O₈. Here, of lithium aluminosilicates, LiAlSiO₄ is particularly preferred in terms of stability and durability of the three-dimensional network structure. Further, as the matrix for dispersing the silicon particles contained in the non-aqueous electrolyte lithium ion secondary battery negative electrode active material of this embodiment, there may be used a lithium metallic silicate prepared by substituting the aluminum composing the lithium aluminosilicate with an element whose chemical properties are similar to those of aluminum, such as Ca, Mg, Ti, V, Fe, Ta, Y, Zr, Bi, Mn, and Ba.

In a crystal structure analysis conducted by an X-ray diffraction method (XRD) specified in JIS H7805:2005, the lithium aluminosilicate composing the lithium ion secondary battery negative electrode active material of this embodiment has peaks of 28.20 to 28.60, 47.10 to 47.50, and 55.90 to 56.30 as diffraction peaks 2θ (deg) attributable to silicon; and has peaks of 25.10 to 25.90, 47.10 to 47.90, and 55.80 to 56.80 as diffraction peaks 2θ (deg) attributable to lithium aluminosilicate.

As for the lithium aluminosilicate composing the lithium ion secondary battery negative electrode active material of this embodiment, in the general formula (1), it is preferred that a ratio (y/x) which is a ratio between Si (silicon) and Al (aluminum) composing the lithium aluminosilicate satisfy a condition of 1.0≤(y/x)≤5.5. It is desirable when the Si/Al ratio (y/x) which is the ratio between Si (silicon) and Al (aluminum) composing the lithium aluminosilicate is in the above range, because the three-dimensional network structure can be formed in a proper quantity. In contrast, the disadvantages when the Si/Al ratio (y/x) is out of the above range are as follows. That is, it is not preferable when the Si/Al ratio (y/x) is lower than 1.0, because Al₂O₃ will appear as a subphase in addition to the main phase which is a matrix with a three-dimensional network structure. Further, it is not preferable when the Si/Al ratio (y/x) is greater than 5.5, because SiO₂ that impairs initial efficiency will appear as a subphase in addition to the main phase which is a matrix with a three-dimensional network structure.

Here, as long as the general formula (1) is satisfied, the lithium aluminosilicate composing the lithium ion secondary battery negative electrode active material of this embodiment can still be a subject of the present invention even when the Si/Al ratio (y/x) is out of the above range. The reason for that is because while the abovementioned disadvantages will occur when the Si/Al ratio (y/x) is out of the above range, the target effect of the present invention can still be expressed because the main phase will have a three-dimensional network structure.

In this way, when the lithium aluminosilicate used as the main phase of the matrix for the silicon particles composing the lithium ion secondary battery negative electrode active material satisfies the general formula (1), there can be ensured the electric conductivity of the silicon particles in a negative electrode that contains the above negative electrode active material using such lithium aluminosilicate. Further, when a lithium aluminosilicate satisfies the general formula (1), the lithium aluminosilicate shall have a high strength, which makes it possible to maintain a three-dimensional network structure even after the charge and discharge of a lithium ion secondary battery equipped with the above negative electrode. Thus, the silicon particles as an active material contained in the lithium ion secondary battery negative electrode active material can have their expansion and contraction suppressed by the lithium aluminosilicate. As a result, the silicon particles as an active material contained in the lithium ion secondary battery negative electrode active material will not collapse even after the charge and discharge of a lithium ion secondary battery equipped with the above negative electrode.

It is preferred that the silicon particles have an average particle size of 5 to 100 nm. It is preferable when the average particle size of the silicon particles is 5 nm or larger, because the microstructure of the lithium ion secondary battery negative electrode active material will be stabilized. It is preferable when the average particle size of the silicon particles is 100 nm or smaller, because with finer silicon particles, there can be suppressed the expansion of the silicon particles that is caused by changes in volume at the time of the charge and discharge of a lithium ion secondary battery equipped with a negative electrode using the lithium ion secondary battery negative electrode active material of this embodiment. Here, the average particle size of the silicon particles can be obtained by conducting an XRD measurement on the lithium ion secondary battery negative electrode active material of this embodiment, and then using the Scherrer equation to perform calculation based on the half-value width of the Si peak. Here, the Scherrer equation is expressed as D=Kλ/Bcosθ, where D: crystalline size (nm), K: Scherrer constant, λ: wavelength of X-ray (nm), B: half-value width (rad), θ: Bragg angle (rad).

It is preferred that the silicon particles (Si particles) contained in the lithium ion secondary battery negative electrode active material of this embodiment be contained therein at a ratio of 40 to 90% by mass. It is preferable when the silicon particles are contained at a ratio of 40% by mass or higher, because not only there can be ensured the electric conductivity of the silicon particles in a negative electrode that contains the above negative electrode active material using the silicon particles and the lithium aluminosilicate as the matrix, but the charge and discharge of a lithium ion secondary battery equipped with such negative electrode is made possible. Meanwhile, it is preferable when the silicon particles are contained at a ratio of 90% by mass or lower, because the discharge capacity retention ratio (cycle characteristic) of a lithium ion secondary battery equipped with the above negative electrode can be improved.

As described above, since the lithium ion secondary battery negative electrode active material of this embodiment is composed of a lithium aluminosilicate capable of maintaining a three-dimensional network structure, as a matrix of silicon particles, the collapse of the silicon particles can be suppressed, and there can be provided a lithium ion secondary battery superior in discharge capacity retention ratio (cycle characteristic).

### [Second Embodiment]

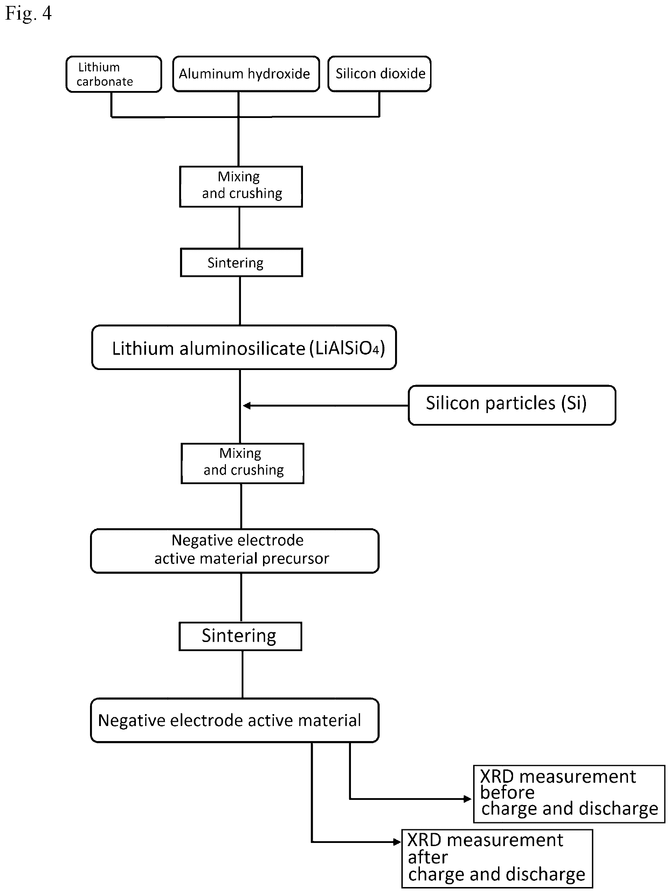

Next, as a second embodiment, described is a method for producing a lithium ion secondary battery negative electrode active material. Fig. 4 is a flowchart showing the steps in the method of this embodiment for producing a lithium ion secondary battery negative electrode active material. As shown in Fig. 4, the method of this embodiment for producing a lithium ion secondary battery negative electrode active material is a production method of a lithium ion secondary battery negative electrode active material with silicon particles being dispersed in a matrix that contains a lithium aluminosilicate having a three-dimensional network structure, and the method includes the flowing steps (I) to (III). These steps are described hereunder.

### <Step (I); step of producing lithium aluminosilicate>

The method of this embodiment for producing a lithium ion secondary battery negative electrode active material includes a step (I) which is a step of producing a lithium aluminosilicate. Raw materials of the lithium aluminosilicate produced in the step (I) are lithium carbonate, aluminum hydroxide, and silicon dioxide. These raw materials are weighed in given amounts. There are no particular limitations on a mixing ratio (mass ratio) between lithium carbonate, aluminum hydroxide, and silicon dioxide so long as it is a mixing ratio with which a lithium aluminosilicate having a three-dimensional network structure can be formed; however, if producing LiAlSiO₄, it is preferred that the mixing ratio be lithium carbonate: aluminum hydroxide : silicon dioxide = 2.0 : 3.0 : 4.0 in terms of mass ratio. Further, if producing LiAlSi₂O₆, the lithium aluminosilicate can be synthesized by doubling the aforementioned ratio of silicon dioxide; and if producing LiAlSi₃O₈, the lithium aluminosilicate can be synthesized by tripling the aforementioned ratio of silicon dioxide. Here, the mass ratio of lithium carbonate: aluminum hydroxide : silicon dioxide can be appropriately determined based on the amounts of lithium, aluminum, and silicon contained in each corresponding raw material. Particularly, other than lithium carbonate used as a raw material in the step (I), there may also be used lithium hydroxide, lithium oxide, and lithium sulfate. Other than aluminum hydroxide used as a raw material in the step (I), there may also be used, for example, aluminum oxide, aluminum carbonate, and aluminum sulfate.

Next, the given amounts of lithium carbonate, aluminum hydroxide, and silicon dioxide as the raw materials of the lithium aluminosilicate are mixed and crushed. The mixing and crushing of these raw materials is carried out for a given period of time, using a device such as a ball mill. After mixing and crushing, the raw materials are turned into a mixture of lithium carbonate, aluminum hydroxide, and silicon dioxide that has a given particle size.

Further, the raw materials obtained as above are sintered at a temperature of 800 to 1,000°C under an atmospheric pressure atmosphere. It is preferable when the sintering temperature is 800°C or higher, because the reaction between aluminum hydroxide and silicon dioxide will proceed sufficiently, whereby covalent bonds can be formed among the atoms Al-Si-O. It is preferable when the sintering temperature is 1,000°C or lower, because the three-dimensional network structure of the lithium aluminosilicate can be maintained.

### <Step (II); step of producing negative electrode active material precursor>

The method of this embodiment for producing a lithium ion secondary battery negative electrode active material includes a step of producing a negative electrode active material precursor by mixing and crushing the lithium aluminosilicate produced in the step (I) and silicon particles. The negative electrode active material precursor produced in the step (II) contains the lithium aluminosilicate and silicon particles. In the step (II), the lithium aluminosilicate and silicon particles are mixed and crushed. Specifically, the lithium aluminosilicate and silicon particles are put into a container such as a ball mill, followed by rotating the ball mill so as to mix and crush the lithium aluminosilicate and the silicon particles. Here, as for a mass ratio between the lithium aluminosilicate and the silicon particles, it is preferred that with the lithium aluminosilicate being present at 10 to 60% by mass, the silicon particles are present at 40 to 90% by mass. It is preferable when the mass of the lithium aluminosilicate is in the above range, because the silicon particles contained in the lithium ion secondary battery negative electrode active material can be supported sufficiently. Further, it is preferable when the mass of the silicon particles is in the above range, because the cycle characteristic of a lithium ion secondary battery can be retained. In the step (II), there is formed a precursor of the lithium ion secondary battery negative electrode active material composed of the lithium aluminosilicate having a three-dimensional network structure and the silicon particles. The silicon particles mixed into the lithium aluminosilicate in the step (II) play a role as a lithium ion secondary battery negative electrode active material. Here, in the step (II), it is preferred that the silicon particles contained in the mixture of the lithium aluminosilicate and silicon particles before mixing and crushing have a particle size of 0.2 to 100 µm. When the particle size of the silicon particles before mixing and crushing is in such range, the particle size of the silicon particles contained in the negative electrode active material precursor that is obtained by mixing and crushing the lithium aluminosilicate and silicon particles can be adjusted to 5 to 100 nm.

### <Step (III); step of sintering negative electrode active material precursor under inert gas atmosphere>

The method of this embodiment for producing a lithium ion secondary battery negative electrode active material includes a step (III) which is a step of sintering the negative electrode active material precursor produced in the step (II) under an inert gas atmosphere. By sintering the negative electrode active material precursor under an inert gas atmosphere, the negative electrode active material precursor is turned into the lithium ion secondary battery negative electrode active material. Further, in the step (III), in order to control the oxygen non-stoichiometry δ in the lithium aluminosilicate which is the main phase of the matrix composing the lithium ion secondary battery negative electrode active material, the negative electrode active material precursor may be sintered under an oxygen atmosphere before being sintered in an inert gas atmosphere. Further, in the step (III), in order to control the oxygen non-stoichiometry δ in the lithium aluminosilicate which is the main phase of the matrix composing the lithium ion secondary battery negative electrode active material, the negative electrode active material precursor may be sintered under the presence of a reducing agent before being sintered in an inert gas atmosphere. In this way, as a pre-step of the step (III), by sintering the negative electrode active material precursor in an oxygen atmosphere or under the presence of a reducing agent, oxygen deficiency involving oxygen vacancy and metal deficiency due to excess oxygen can be compensated for.

A sintering temperature of the negative electrode active material precursor is preferably 500 to 1,000°C. It is preferable when the sintering temperature of the negative electrode active material precursor is 500°C or higher, because the structure of the lithium ion secondary battery negative electrode active material will be stabilized as the negative electrode active material precursor is heated; it is also preferable when the sintering temperature of the negative electrode active material precursor is 1,000°C or lower, because degradation of the negative electrode active material precursor will not occur. A heat treatment time of the negative electrode active material precursor is preferably 0.5 to 40 hours, particularly preferably 1 to 20 hours. It is preferable when the heat treatment time is 0.5 hours or longer, because the reaction of the precursor will proceed. It is preferable when the heat treatment time is 40 hours or shorter, because volatilization of Li can be suppressed. Here, the negative electrode active material precursor is sintered under the presence of an inert gas such as nitrogen and argon. This is because the negative electrode active material precursor will be prevented from reacting with oxygen in the atmosphere, whereby the structure of the composite will become strong, thus allowing there to be obtained a stabilized lithium ion secondary battery negative electrode active material.

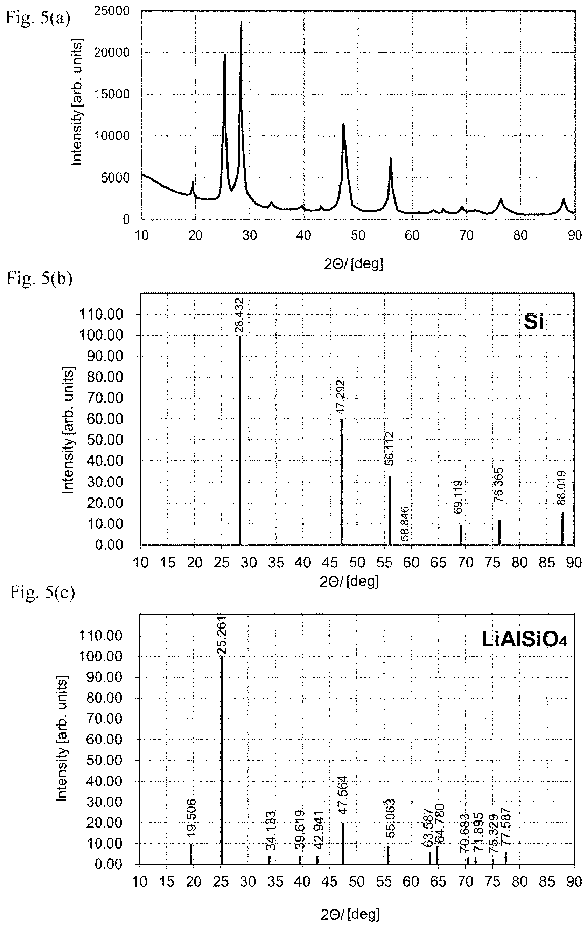

Fig. 5 shows a measurement result(s) of X-ray diffractometry (XRD) performed on a lithium ion secondary battery negative electrode active material which is a composite of LiAlSiO₄ and Si (silicon particles) that was produced through the steps (I) to (III) included in the method of this embodiment for producing a lithium ion secondary battery negative electrode active material. Specifically, Fig. 5(a) shows a measurement result of X-ray diffractometry (XRD) performed on the produced lithium ion secondary battery negative electrode active material which is a composite of LiAlSiO₄ and Si (silicon particles). Fig. 5(b) shows a literature measurement result (Non-Patent Literature 1) of X-ray diffractometry (XRD) performed on Si (silicon particles) contained in the produced lithium ion secondary battery negative electrode active material which is the composite of LiAlSiO₄ and Si (silicon particles). Fig. 5(c) shows a literature measurement result (Non-Patent Literature 2) of X-ray diffractometry (XRD) performed on LiAlSiO₄ contained in the produced lithium ion secondary battery negative electrode active material which is the composite of LiAlSiO₄ and Si (silicon particles).

As is also clear from Fig. 5(a), the composite obtained by sintering the negative electrode active material precursor via the step (III) has peaks in the vicinity of 28.43, 47.29, and 56.11 (2θ/deg) that are attributable to the silicon particles; and peaks in the vicinity of 25.26, 47.56, and 55.96 (2θ/deg) that are attributable to LiAlSiO₄. Here, the negative electrode active material precursor is prepared by mixing and crushing the lithium aluminosilicate and the silicon particles.

It became clear that these peaks were substantially identical to the diffraction peaks of Si and the diffraction peaks of LiAlSiO₄ that can be found in a database (Atom Work; http://crystdb.nims.go.jp/) provided by National Institute for Materials Science (NIMS). These X-ray diffractometry (XRD) measurement results indicate that the complex compound produced by the method of this embodiment for producing a lithium ion secondary battery negative electrode active material is a composite of LiAlSiO₄ and Si (silicon particles).

As shown in Fig. 5(a), as for the lithium ion secondary battery negative electrode active material produced by the method of this embodiment for producing a lithium ion secondary battery negative electrode active material, in which the lithium aluminosilicate and the silicon particles are mixed, it is clear that this material has a structure where the silicon particles are dispersed in a matrix whose main phase is the polycrystalline LiAlSiO₄ having a three-dimensional network structure.

As for the lithium ion secondary battery negative electrode active material produced by the method of this embodiment for producing a lithium ion secondary battery negative electrode active material, in which the silicon particles and the matrix whose main phase is the lithium aluminosilicate are mixed, the microstructure thereof can still be maintained as a three-dimensional network structure even after the charge and discharge of a lithium ion secondary battery equipped with a negative electrode containing such lithium ion secondary battery negative electrode active material. That is, the lithium ion secondary battery negative electrode active material produced by the method of this embodiment for producing a lithium ion secondary battery negative electrode active material has a technical characteristic in that since the lithium aluminosilicate has a three-dimensional network structure, even after the charge and discharge of a lithium ion secondary battery equipped with a negative electrode containing such lithium ion secondary battery negative electrode active material, the network (three-dimensional network structure) that is three-dimensionally formed among aluminum (Al), silicon (Si), and oxygen (O), which serves as the basis for the microstructure of the material, can be maintained.

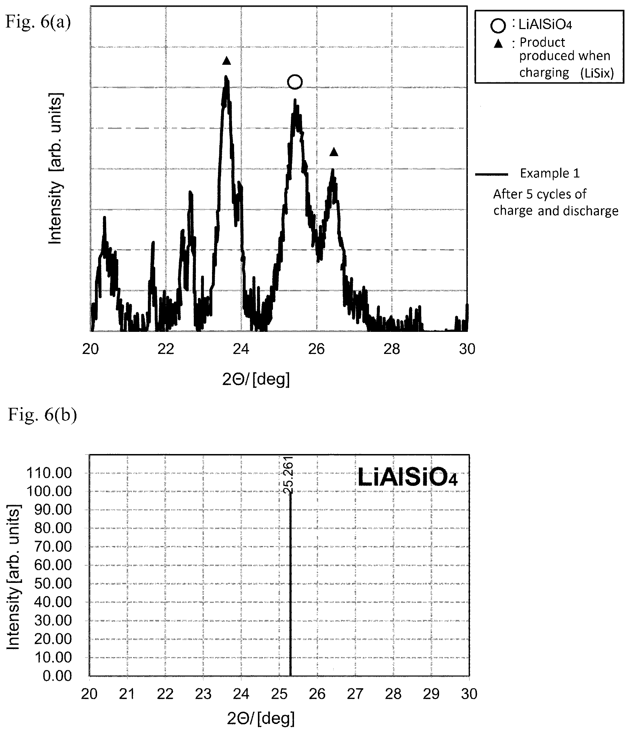

Fig. 6 is a set of graphs showing a measurement result(s) of X-ray diffractometry (XRD) performed on the composite (after charge and discharge of secondary battery) that composes the lithium ion secondary battery negative electrode active material of the present invention and consists of LiAlSiO₄ and Si (silicon particles). Specifically, Fig. 6(a) shows a measurement result of an X-ray diffraction (XRD) measurement performed on a negative electrode containing the lithium ion secondary battery negative electrode active material, the measurement being conducted for the purpose of verifying in what form the crystal of LiAlSiO₄ is present after second battery charge and discharge cycles. With regard to the X-ray diffraction (XRD) measurement performed on the negative electrode as shown in Fig. 6(a), for the sake of excluding the impact of graphite (MAG), there was manufactured an electrode whose composition ratio was: 91% of Si as a negative electrode; 3.0% of CMC as a binder; 3.0% of SBR as a binder; and 3.0% of acetylene black as a conductive assistant. This electrode was manufactured in a similar procedure as that shown in the embodiment of the present invention. For X-ray diffraction (XRD) measurement, a cycle test was conducted with a charge/discharge current of 0.5 mA, and a coin-type secondary battery that had been subjected to 5 cycles was then disassembled in a glove box, where the negative electrode removed therefrom was used.

Fig. 6(b) shows a diffraction peak of LiAlSiO₄ that can be found in the database (Atom Work; http://crystdb.nims.go.jp/) provided by the National Institute for Materials Science (NIMS).

It became clear that LiAlSiO₄ composing the lithium ion secondary battery negative electrode active material shown in Fig. 6(a) had the diffraction peak of LiAlSiO₄ that is shown in Fig. 6(b) in the vicinity of 25°. That is, it became clear that in the case of the lithium ion secondary battery negative electrode active material of this embodiment, even after the charge and discharge of a lithium ion secondary battery equipped with a negative electrode containing such lithium ion secondary battery negative electrode active material, the crystal is able to maintain the network (three-dimensional network structure) that is three-dimensionally formed among Al, Si, and O, which serves as the basis for the microstructure of the material.

As described above, with the method of this embodiment for producing a lithium ion secondary battery negative electrode active material, there can be produced a lithium ion secondary battery negative electrode active material as a composite whose matrix is a lithium aluminosilicate having a three-dimensional network structure in which bonds among aluminum (Al), silicon (Si), and oxygen (O) are formed three-dimensionally, where silicon particles remain dispersed in such matrix even after charge and discharge.

### [Third Embodiment]

A lithium ion secondary battery negative electrode of a third embodiment is described. The lithium ion secondary battery negative electrode of this embodiment contains the lithium ion secondary battery negative electrode active material of the above embodiment. The negative electrode of this embodiment that contains the lithium ion secondary battery negative electrode active material can be doped and undoped with lithium ions at an electric potential lower than that of a positive electrode. As a form of the lithium ion secondary battery negative electrode of this embodiment, there may be listed, for example, a negative electrode with a negative electrode mixture that contains the lithium ion secondary battery negative electrode active material of the above embodiment being supported on a negative electrode collector, and an negative electrode only composed of the lithium ion secondary battery negative electrode active material of the above embodiment.

### (Other negative electrode active materials)

As for the lithium ion secondary battery negative electrode active material contained in the lithium ion secondary battery negative electrode of this embodiment, the lithium ion secondary battery negative electrode active material of the above embodiment may further contain other negative electrode active materials to the extent that the object of the present invention is not undermined. Such other negative electrode active materials may include materials capable of being doped and undoped with lithium ions at an electric potential lower than that of a positive electrode, such as a carbon material, an oxide, a sulfide, a nitride, a metal, or an alloy.

Examples of a carbon material that can be used as such other negative electrode active material include graphite such as natural graphite and artificial graphite; cokes; carbon black; pyrolytic carbons; carbon fibers; and an organic polymer compound sintered body. Any one kind of these carbon material, oxide, sulfide, nitride, and the like may be used alone, or two or more kinds of them may be used in combination. Further, these carbon material, oxide, sulfide, nitride, and the like may be either crystalline or amorphous.

Of the above other negative electrode active materials, a carbon material whose main component is graphite such as natural graphite and artificial graphite is preferably used for reasons such as the fact that the electric potential of the negative electrode barely changes from an uncharged state through a fully charged state when charging (i.e., good potential flatness), the fact that the average discharge potential is low, and the fact that the capacity retention ratio is high when repeatedly performing charge and discharge (i.e., good cycle characteristic). The shape of such carbon material may, for example, be any of a flake shape such as that of natural graphite, a spherical shape such as that of meso-carbon microbeads, a fibrous shape such as that of graphitized carbon fibers, or even an aggregate of a fine powder.

The negative electrode mixture may contain a binder if necessary. The binder may, for example, be a thermoplastic resin, specific examples of which may include polyvinylidene fluoride, thermoplastic polyimide, carboxymethylcellulose, polyethylene, and polypropylene.

### (Negative electrode collector)

The negative electrode collector of the negative electrode of this embodiment may, for example, be a strip member whose formation material is a metallic material such as copper (Cu), nickel (Ni), and stainless steel. Particularly, it is preferred that copper (Cu) be used as a formation material and processed into the shape of a thin film due to the fact that copper does not easily form an alloy with lithium and is easy to process.

As a method for supporting the negative electrode mixture on such negative electrode collector, there may be used, for example, a method employing pressure molding; and a method in which the negative electrode mixture is at first turned into a paste with a solvent or the like and then applied to the negative electrode collector, where, after drying, the negative electrode mixture is pressed so as to be press-bonded to the negative electrode collector.

As described above, the lithium ion secondary battery negative electrode of this embodiment contains a lithium ion secondary battery negative electrode active material in which silicon particles are dispersed in a matrix that contains a lithium aluminosilicate having a three-dimensional network structure. Thus, a secondary battery equipped with the lithium ion secondary battery negative electrode of this embodiment is superior in charge/discharge capacity retention ratio (cycle characteristic), and also has a favorable cycle characteristic especially as an in-vehicle lithium ion secondary battery.

### [Fourth embodiment]

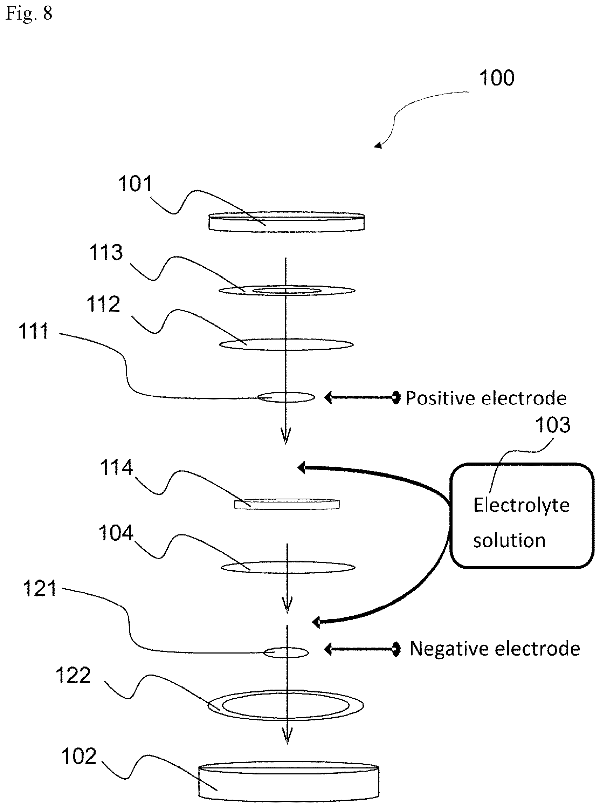

A lithium ion secondary battery of a fourth embodiment is described. Fig. 8 is a model diagram showing the structure of a lithium ion secondary battery equipped with a lithium ion secondary battery negative electrode. As shown in Fig. 8, the lithium ion secondary battery of this embodiment is equipped with the lithium ion secondary battery negative electrode of the above embodiment. Here, the lithium ion secondary battery negative electrode may, for example, have such a columnar shape that a cross-section thereof established by cutting the electrode along a direction perpendicular to the winding axis has a circular shape, an oval shape, a rectangular shape, or a rectangular shape with rounded corners.

Further, as a specific example of the shape of a lithium ion secondary battery having such electrode, there may be employed the shape stipulated in IEC60086 which is an international electrotechnical commission (IEC) standard for batteries, or the shape stipulated in JIS C8500. Examples of a preferable shape of the above lithium ion secondary battery negative electrode may include a cylindrical shape and a rectangular shape. Further, the lithium ion secondary battery negative electrode in a lithium ion secondary battery is not limited to the aforementioned wound configuration, but may also be of a laminated configuration that is established by repeatedly stacking lamination structures each composed of a positive electrode, a separator, the above negative electrode, and a separator. Examples of a laminated lithium secondary battery may include a so-called coin-type battery, button-type battery, and paper-type (or sheet-type) battery.

In addition to the lithium ion secondary battery negative electrode of the above embodiment, the lithium ion secondary battery of this embodiment mainly includes a positive electrode active material-containing positive electrode, an electrolyte solution, and a separator. Each element is described hereunder.

### <Positive electrode>

The positive electrode in the lithium ion secondary battery of this embodiment can be produced by preparing a positive electrode mixture that contains a positive electrode active material, a conductive material, and a binder, and then supporting such positive electrode mixture on a positive electrode collector.

### (Positive electrode active material)

As the positive electrode active material, there can be used a compound (lithiated intercalation compound) enabling reversible intercalation and deintercalation of lithium. Specifically, there may be used one or more kinds of complex oxides of lithium and metals such as cobalt, manganese, nickel, or combinations thereof. Specific examples of the positive electrode active material include lithium cobaltate, lithium nickelate, and lithium manganate.

### (Conductive material)

As the conductive material contained in the positive electrode of the lithium ion secondary battery of this embodiment, there may be used a carbon material. Examples of such carbon material include a graphite powder, carbon black (e.g., acetylene black), and a fibrous carbon material. Carbon black, being fine particles and thus having a large surface area, is capable of improving conductivity inside the positive electrode and improving charge/discharge efficiency and output characteristic when added to the positive electrode mixture by a small amount. Meanwhile, an excessive amount of carbon black will rather contribute to an increase in internal resistance as both a binding force between the positive electrode mixture and the positive electrode collector and a binding force inside the positive electrode mixture will deteriorate, the binding force(s) being brought about by the binder.

As for a ratio of the conductive material in the positive electrode mixture, it is preferred that the conductive material be present at a ratio of 5 to 20 parts by mass per 100 parts by mass of the positive electrode active material. This ratio can also be lowered if a fibrous carbon material such as graphitized carbon fibers and carbon nanotubes is used as the conductive material.

### (Binder)

As the binder in the positive electrode, there can be used a thermoplastic resin. Examples of such thermoplastic resin include fluorine resins such as polyvinylidene fluoride, polytetrafluoroethylene, an ethylene tetrafluoride/propylene hexafluoride/vinylidene fluoride-based copolymer, a propylene hexafluoride/vinylidene fluoride-based copolymer, and an ethylene tetrafluoride/perfluorovinylether-based copolymer; and polyolefin resins such as polyethylene and polypropylene. Two or more kinds of these thermoplastic resins may be used in a mixed manner.

### (Positive electrode collector)

As the positive electrode collector in the positive electrode of this embodiment, there may be used a strip member whose formation material is a metallic material such as aluminum (Al), nickel (Ni), and stainless steel. Particularly, it is preferred that aluminum (Al) be used as a formation material and processed into the shape of a thin film due to the fact that aluminum is easy to process and inexpensive.

As a method for supporting the positive electrode mixture on the positive electrode collector, there may be used, for example, a method of pressure-molding the positive electrode mixture on the positive electrode collector. Further, the positive electrode mixture may also be supported on the positive electrode collector in such a manner that the positive electrode mixture is at first turned into a paste with an organic solvent or the like, and the obtained paste of the positive electrode mixture is then applied to at least one surface side of the positive electrode collector before being dried and press-fixed thereto.

When turning the positive electrode mixture into a paste, examples of a usable organic solvent include an amine-based solvent such as N, N-dimethylaminopropylamine and diethylenetriamine; an ether-based solvent such as tetrahydrofuran; a ketone-based solvent such as methylethylketone; an ester-based solvent such as methyl acetate; and an amide-based solvent such as dimethylacetamide and N-methyl-2-pyrrolidone.

As a method for applying the paste of the positive electrode mixture to the positive electrode collector, there may be listed, for example, a slit die coating method, a screen coating method, a curtain coating method, a knife coating method, a gravure coating method, and an electrostatic spraying method.

### <Separator>

As the separator used in the lithium ion secondary battery of this embodiment, there may be used a member formed into the shape of, for example, a porous film, unwoven cloth, or woven cloth that is made of a material including, for example, a polyolefin resin such as polyethylene and polypropylene, a fluorine resin, and a nitrogen-containing aromatic polymer. Further, the separator may be formed by using two or more kinds of these materials, or by laminating these materials.

In the case of the lithium ion secondary battery of this embodiment, in order for the separator to favorably pass electrolytes when using the battery (at the time of charge and discharge), it is preferred that the separator have an air permeability resistance of not lower than 50 sec/100 cc, but not higher than 300 sec/100 cc, more preferably not lower than 50 sec/100 cc, but not higher than 200 sec/100 cc, when measured by the Gurley method as stipulated in JIS P8117.

### <Electrolyte solution>

The electrolyte solution used in the lithium ion secondary battery of this embodiment may contain an electrolyte(s) and an organic solvent. Examples of the electrolyte contained in the electrolyte solution may include lithium salts such as LiClO₄, LiPF₆, LiAsF₆, LiSbF₆, LiBF₄, LiCF₃SO₃, LiN(SO₂CF₃)₂, LiN(SO₂C₂F₅)₂, LiN(SO₂CF₃)(COCF₃), Li(C₄F₉SO₃), LiC(SO₂CF₃)₃, Li₂B₁₀Cl₁₀, LiBOB (where BOB indicates bis(oxalato)borate), LiFSI (where FSI indicates bis(fluorosulfonyl)imide), a lower aliphatic carboxylic acid lithium salt, and LiAlCl₄. Further, there may also be used a mixture of two or more kinds of electrolytes selected from these electrolytes. As the electrolyte(s), it is preferred that there be used an electrolyte containing at least one kind selected from the group consisting of LiPF₆, LiAsF₆, LiSbF₆, LiBF₄, LiCF₃SO₃, LiN(SO₂CF₃)₂, and LiC(SO₂CF₃)₃ that contain fluorine.

As the organic solvent, there may be used carbonates, ethers, nitriles, carbamates, and sulfur-containing compounds. Examples of carbonates include propylene carbonate, ethylene carbonate, dimethyl carbonate, diethyl carbonate, ethyl methyl carbonate, 4-trifluoromethyl-1, 3-dioxolan-2-one, and 1, 2-di(methoxycarbonyloxy)ethane. Examples of ethers include 1, 2-dimethoxyethane, 1, 3-dimethoxypropane, pentafluoropropyl methyl ether, 2, 2, 3, 3-tetrafluoropropyl difluoromethyl ether, tetrahydrofuran, and 2-methyltetrahydrofuran. Examples of esters include methyl formate, methyl acetate, and γ-butyrolactone. Examples of nitriles include acetonitrile and butyronitrile. Examples of amides include N,N-dimethylformamide and N,N-dimethylacetamide. Examples of carbamates include 3-methyl-2-oxazolidone. Examples of sulfur-containing compounds include sulfolane, dimethyl sulfoxide, and 1, 3-propanesultone.

As the organic solvent, it is preferred that two or more kinds of these organic solvents be used in a mixed manner. Particularly, a mixed solvent containing carbonates is preferred; more preferred are a mixed solvent of a cyclic carbonate and non-cyclic carbonate, and a mixed solvent of a cyclic carbonate and ethers.

A solid electrolyte(s) may be used instead of an electrolyte solution. As a solid electrolyte, there may be used, for example, an organic polymer electrolyte such as a polyethylene oxide-based polymer compound, and a polymer compound containing at least one of a polyorganosiloxane chain or polyoxyalkylene chain. Further, there may be used a so-called gel-type electrolyte with a non-aqueous electrolyte solution being held by a polymer compound. Further, there may be listed, for example, sulfide-containing inorganic solid electrolytes such as Li₂S-SiS₂, Li₂S-GeS₂, Li₂S-P₂S₅, Li₂S-B₂S₃, Li₂S-SiS₂-Li₃PO₄, Li₂S-SiS₂-Li₂SO₄, and Li₂S-GeS₂-P₂S₅, and there may be used a mixture of two or more of them.

Moreover, in the case of the lithium ion secondary battery of this embodiment, when using a solid electrolyte, the solid electrolyte may play a role as a separator, whereby a separator is no longer required if this is the case.

The lithium ion secondary battery of this embodiment is a secondary battery and can be repeatedly charged and discharged. Thus, the lithium ion secondary battery of this embodiment is, for example, suitable as an in-vehicle battery. Especially, the lithium ion secondary battery of this embodiment can be suitably used as a battery mounted in EV vehicles (electric vehicles) that run by driving the motor, using the electricity from a battery. EV vehicles (electric vehicles) include BEV vehicles (battery electric vehicles) using only the electricity from a battery, and HV vehicles (hybrid vehicles). When applying the lithium ion secondary battery of this embodiment to an HV vehicle (hybrid vehicle), the usage thereof is not limited to that as a hybrid vehicle battery that is configured to supply electric power to a motor for driving the vehicle, but the battery of this embodiment may also be used as a battery that is configured to supply electric power to a starter motor for restarting the engine in a vehicle having an idling stop function. Here, a secondary battery also includes the use of a secondary battery as a primary battery (i.e., an intended use in which the battery is discharged only once after being charged.).

As described above, the lithium ion secondary battery of this embodiment has a negative electrode containing a lithium ion secondary battery negative electrode active material with silicon particles being dispersed in a matrix that contains a lithium aluminosilicate having a three-dimensional network structure. Therefore, the lithium ion secondary battery of this embodiment is superior in charge/discharge capacity retention ratio (cycle characteristic), and also has a favorable cycle characteristic, especially as an in-vehicle lithium ion secondary battery.

### [Other embodiments]

The invention of this application has been described so far with reference to the embodiments; however, the invention of this application shall not be limited to the above embodiments. Various modifications comprehensible to those skilled in the art within the technical scope of the invention of this application can be made to the structures and details of the invention of this application.

### Examples

### Example 1

As a matrix in which silicon particles were to be dispersed, there was produced LiAlSiO₄ which was a lithium aluminosilicate of the above general formula (1) in which x=1.0, y=1.0, and δ=0. After producing a lithium ion secondary battery negative electrode active material using a matrix whose main phase was LiAlSiO₄ as a lithium aluminosilicate, there was produced a negative electrode containing such negative electrode active material. Further, there was produced a coin-type secondary battery as a lithium ion secondary battery equipped with the above negative electrode. Next, the coin-type secondary battery produced was evaluated (discharge capacity retention ratio (cycle characteristic)). Specifically, the negative electrode active material, negative electrode, and coin-type secondary battery were produced as follows, and the coin-type secondary battery was evaluated.

### <Production of negative electrode active material>

As raw materials of the matrix contained in the negative electrode active material, lithium carbonate (Li₂CO₃), silicon dioxide (SiO₂), and aluminum hydroxide (Al(OH)₃) were weighed to achieve a composition of LiAlSi_{0.6}O_{3.2} (Li=38.5%, Si=23.0%, M(Al)=38.5%, in terms of % by mass), followed by putting these raw materials into a powder mixer with rocking and rotating action of container (rocking mixer "RM10-3" by AICHI ELECTRIC CO., LTD.) and performing dry mixing for 4.0 hours. Dry mixing was performed using nylon ball mill balls (with iron cores having a diameter Φ: 20 mm) as media. After the dry mixing was over, there was obtained a mixed powder of lithium carbonate (Li₂CO₃), silicon dioxide (SiO₂), and aluminum hydroxide (Al(OH)₃). The mixed powder obtained was then sintered at 800 to 1,000°C under an atmospheric pressure atmosphere, thereby obtaining a matrix whose main phase was a lithium aluminosilicate.

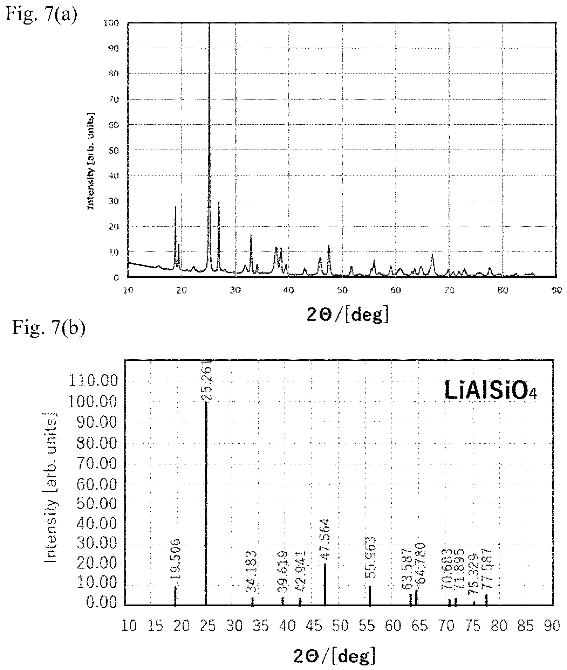

The diffraction pattern of the lithium aluminosilicate obtained was measured by X-ray diffractometry (XRD), whereby an XRD profile shown in Fig. 7(a) was obtained. Fig. 7(a) is an actually measured XRD profile of the lithium aluminosilicate produced in Example 1. Fig. 7(b) is a reference XRD profile showing the known diffraction peaks of LiAlSiO₄. Here, the reference XRD profile of Fig. 7(b) that shows the known diffraction peaks of LiAlSiO₄ indicates the diffraction peaks of LiAlSiO₄ that can be found in the database (Atom Work; http://crystdb.nims.go.jp/) provided by National Institute for Materials Science (NIMS).

As a result of comparing and precisely studying the actually measured XRD profile of Fig. 7(a) of the lithium aluminosilicate produced in Example 1 and the reference XRD profile of Fig. 7(b) that shows the known diffraction peaks of LiAlSiO₄, it was confirmed that in the actually measured XRD profile of the lithium aluminosilicate produced in Example 1, the reflection peak of the LiAlSiO₄ compound existed as a main peak in the vicinity of 25.25 (2θ/deg). This result revealed that the main phase of the matrix produced in in Example 1 was a lithium aluminosilicate having a three-dimensional network structure.

As a raw material of the negative electrode active material, there was used a mixture of Si (silicon particles) and the matrix whose main phase was the obtained LiAlSiO₄. Given amounts of the LiAlSiO₄ and Si (silicon particles) were put into a planetary ball mill (Classic Line P-5 by FRITSCH GmbH, Germany) and crushed at a rotation number of 200 rpm for 15.0 hours. As Si (silicon particles), there were used silicon particles having an average particle size of 10 µm. Here, crushing was performed using chromium steel balls (diameter Φ 20 mm) as media.

The crushed raw material of the negative electrode active material was subjected to a heat treatment at a temperature of 500 to 1,000°C for 1 to 100 hours. The heat-treated sample was crushed via a tungsten mortar and then passed through a sieve having an opening of 75 µm, where the sample that fell under the sieve was regarded as the negative electrode active material. In this way, in an X-ray diffractometry using a Cu-Kα ray, based on the half value width of a diffraction peak attributed to Si (111) centering in the vicinity of 2θ=28.4°, the average particle size of the Si particles contained in the obtained negative electrode active material was calculated to be 14 nm by the Scherrer equation. Further, as a result of analyzing the amounts of Li and Al contained in the negative electrode active material via an ICP optical emission spectrometer (product name "SPS3520UV-DD" by Hitachi High-Tech Science Corporation), a molar ratio between Li and Al was 1:1.

A negative electrode slurry was produced using the negative electrode active material obtained. The negative electrode slurry was composed of negative electrode slurry raw materials (negative electrode active material, graphite), CMC as a binder, and SBR as a binder. The powders of the negative electrode slurry raw materials and the powder of the CMC binder were weighed such that the powders of the negative electrode slurry raw materials and the powder of the CMC binder that are contained in the negative electrode slurry would be present at given mass ratios. Here, the negative electrode slurry raw materials are composed of 30% by mass of the negative electrode active material and 70% by mass of graphite. An ion-exchange water was put into the weighed powders of the negative electrode slurry raw materials and the CMC binder, and a rotating and revolving mixer (product name "AWATORI RENTARO ARE-310" by THINKY Corporation) was used to stir so as to knead them at a rotation number of 2,000 rpm for a stirring time of 1.0 hour.

An ion-exchange water was delivered by drops into a liquid containing the kneaded ion-exchange water and powders of the negative electrode slurry raw materials and the CMC binder to adjust the viscosity of the liquid, followed by adding the SBR binder thereto such that the SBR binder contained in the negative electrode slurry would be present at a given mass ratio, and then kneading them by again stirring them at the rotation number of 2,000 rpm for the stirring time of 1.0 hour, thereby obtaining a negative electrode slurry (slurry for coating negative electrode). After coating a copper (Cu) foil with this negative electrode slurry, the slurry was dried at a drying temperature of 60°C, and a rolling mill was used to perform rolling to obtain a negative electrode.

### <Production of coin-type secondary battery>

As an example of a lithium ion secondary battery shown in Fig. 8, a coin-type secondary battery was produced as follows. The negative electrode was punched out into a circular shape having a diameter Φ: 13 mm, and was vacuum-dried at a drying temperature of 90°C for a drying time of 15.0 h. The vacuum-dried circular negative electrode was then put into a glove box. In the glove box, a coin-type secondary battery was assembled using coin-type secondary battery members for CR2032, metal Li for a counter electrode (lithium; diameter Φ: 15 mm), a LiPF₆ electrolyte solution with a concentration of 1.0 mol/L (electrolyte LiPF₆, electrolyte liquid (ethylene carbonate (EC) : diethyl carbonate (DEC)).

### <Evaluation of coin-type secondary battery>

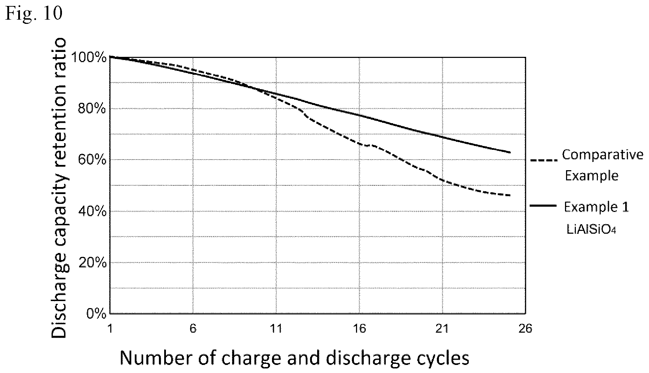

The coin-type secondary battery produced was placed into a charge/discharge device to conduct a charge/discharge test of CC charge-discharge, 0.0 to 1.0V, and rate 0.1 C (0.5 mA). The performance of the negative electrode active material was evaluated by evaluating the discharge capacity retention ratio (cycle characteristic) of the coin-type secondary battery. Shown in Table 1 and Fig. 10 are measurement results of the discharge capacity retention ratios (cycle characteristics) of the coin-type secondary battery that is equipped with the negative electrode material containing the negative electrode active material produced in Example 1, with respect to the number of discharge cycles of the battery.

### Example 2

A lithium ion secondary battery negative electrode active material was produced in a similar manner as Example 1, except that as the matrix in which silicon particles were to be dispersed, there was produced a lithium aluminosilicate LiAlSi₂O₆ (Example 2) in which x=1.0, y=2.0, and δ=0 in the above general formula (1) by changing the ratios of lithium carbonate (Li₂CO₃), silicon dioxide (SiO₂), and aluminum hydroxide (Al(OH)₃) that are contained in the raw materials of the matrix contained in the negative electrode active material. Further, a negative electrode containing such negative electrode active material was produced, a coin-type secondary battery as a lithium ion secondary battery equipped with such a negative electrode was produced, and the discharge capacity retention ratio (cycle characteristic) of the coin-type secondary battery was evaluated in a similar manner as Example 1. Shown in Table 1 are measurement results of the discharge capacity retention ratios (cycle characteristics) of the coin-type secondary battery that is equipped with the negative electrode material containing the negative electrode active material produced in Example 2, with respect to the number of discharge cycles of the battery.

### Comparative Example 1

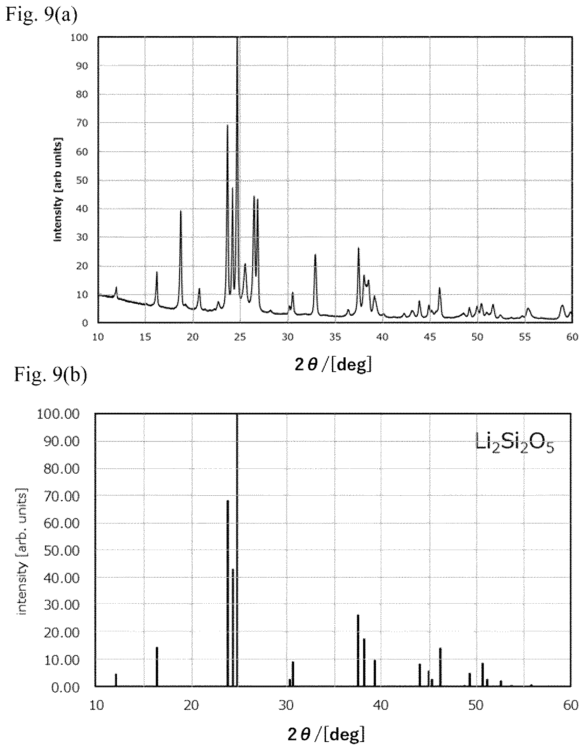

A lithium ion secondary battery negative electrode active material was produced in a similar manner as Example 1, except that the matrix in which silicon particles were to be dispersed was produced in such a way that as raw materials of the matrix contained in the negative electrode active material, lithium carbonate (Li₂CO₃), silicon dioxide (SiO₂), and aluminum hydroxide (Al(OH)₃) were weighed to achieve a composition of LiAlSi_{0.1}O_{2.65} (Li=47.6%, Si=47.6%, M(Al)=4.8%, in terms of % by mass). The diffraction pattern of the matrix obtained was measured by X-ray diffractometry (XRD), whereby an XRD profile shown in Fig. 9(a) was obtained. Fig. 9(a) is an actually measured XRD profile of the matrix produced in Comparative Example 1. Further, Fig. 9(b) is a reference XRD profile showing the known diffraction peaks of Li₂Si₂O₅. Fig. 9(b) shows the diffraction peaks of Li₂Si₂O₅ that can be found in a database provided by the International Centre for Diffraction Data (ICDD).

As a result of comparing and precisely studying the actually measured XRD profile of Fig. 9(a) of the matrix produced in Comparative Example 1 and the reference XRD profile of Fig. 9(b) that shows the known diffraction peaks of Li₂Si₂O₅, it was confirmed that in the actually measured XRD profile of the matrix produced in Comparative Example 1, the reflection peak of the Li₂Si₂O₅ compound existed as a main peak. This result revealed that the main phase of the matrix produced in Comparative Example 1 was a lithium silicate (two-dimensional layered structure).

Further, a negative electrode containing such negative electrode active material was produced, and a coin-type secondary battery as a lithium ion secondary battery equipped with such a negative electrode was produced. The discharge capacity retention ratios (cycle characteristics) of this coin-type secondary battery were evaluated in a similar manner as Example 1. Shown in Table 1 and Fig. 10 are measurement results of the discharge capacity retention ratios (cycle characteristics) of the coin-type secondary battery that is equipped with the negative electrode material containing the negative electrode active material produced in Comparative Example 1, with respect to the number of discharge cycles of the battery.

**[Table 1]**

| Test No. | Composition of negative electrode active material | | Chemical structure of negative electrode active material matrix | | Discharge capacity retention ratio (%) | | Remarks |
|---|---|---|---|---|---|---|---|
| | Matrix main phase | Active material | Before charge and discharge | After charge and discharge | Number of cycles: 16 | Number of cycles: 25 | |
| 1 | LiAlSiO₄ | Silicon | Three-dimensional network structure | Three-dimensional network structure | 77 | 62 | Example 1 |
| 2 | LiAlSi₂O₆ | Silicon | Three-dimensional network structure | Three-dimensional network structure | 77 | 61 | Example 2 |
| 3 | Li₂Si₂O₅ | Silicon | Two-dimensional layer collapse | Li₂Si₂O₅ collapse | 66 | 47 | Comparative Example 1 |

### (Evaluation results)

Compared were the discharge capacity retention ratios (cycle characteristics) of the secondary batteries that were equipped with the negative electrodes containing the negative electrode active materials produced in Examples 1 and 2; and the discharge capacity retention ratios (cycle characteristics) of the secondary battery produced in Comparative Example 1. As is clear from Table 1, while the discharge capacity retention ratios (number of cycles 16) of the secondary batteries that were equipped with the negative electrodes containing the negative electrode active materials produced in Examples 1 and 2 were each 77%, the discharge capacity retention ratio in Comparative Example 1 under the same number of cycles was 66% which was significantly different from those in Examples 1 and 2. This tendency was more noticeable when the number of cycles was 25. Fig. 10 shows more precisely how the discharge capacity retention ratios changed as the number of cycles changed. As can be seen from this diagram, the discharge capacity retention ratio in Example always surpassed that of Comparative Example; it can be confirmed that this difference became more noticeable as the number of charge/discharge cycles increased. These evaluation results revealed that the secondary battery equipped with the negative electrode containing the negative electrode active material of the present invention exhibited favorable discharge capacity retention ratios (cycle characteristics).

As such, the basic effect expected of a lithium aluminosilicate with a three-dimensional network structure that is contained in the lithium ion secondary battery negative electrode active material of the present invention is to improve the discharge capacity retention ratio (cycle characteristic) of a secondary battery equipped with a negative electrode containing such lithium ion secondary battery negative electrode active material. That is, it is considered that the basic effect brought about by the lithium ion secondary battery negative electrode active material of the present invention is the same regardless of whether the electrolyte of a lithium ion secondary battery is a non-aqueous electrolyte or a solid electrolyte.

When the electrolyte of a lithium ion secondary battery is an electrolyte solution system (non-aqueous electrolyte), the expansion and contraction of the silicon particles (Si particles) can be suppressed due to the effect brought about by the lithium aluminosilicate with a three-dimensional network structure that is contained in the lithium ion secondary battery negative electrode active material. As a result, the silicon particles (Si particles) contained in the lithium ion secondary battery negative electrode active material can be prevented from collapsing, i.e., the silicon particles (Si particles) can be prevented from falling off the negative electrode for an ion secondary battery and from being deactivated as the electrolyte solution reacts with the silicon particles (Si particles). In this regard, the life characteristic of a secondary battery can be improved when there is used a negative electrode containing the lithium ion secondary battery negative electrode active material of the present invention, and the electrolyte is an electrolyte solution system (non-aqueous electrolyte).

Meanwhile, when the electrolyte of a lithium ion secondary battery is a solid electrolyte, the expansion and contraction of the silicon particles (Si particles) can be suppressed due to the effect brought about by the lithium aluminosilicate with a three-dimensional network structure that is contained in the lithium ion secondary battery negative electrode active material. As a result, the life characteristic of a secondary battery can be improved as it is easier to maintain an adhered state between the solid electrolyte and the lithium ion secondary battery negative electrode active material which is the composite with the silicon particles being dispersed in the matrix that contains the lithium aluminosilicate having a three-dimensional network structure. In addition, by employing a solid electrolyte as the electrolyte of a lithium ion secondary battery, the entire lithium ion secondary battery can be made solid. As a result, not only the safety and reliability of a lithium ion secondary battery can be dramatically improved, but there can also be achieved higher energy densities and higher outputs.

### Industrial applicability

The lithium ion secondary battery negative electrode active material of the present invention brings about excellent discharge capacity characteristic, cycle life characteristic, and high-rate discharge characteristic. Thus, the present invention is not only suitable as a negative electrode material of an alkaline storage battery for use in a hybrid vehicle and an idling stop vehicle, but may also be favorably used in an alkaline storage battery for use in an electric vehicle, which makes the invention useful in industries such as the electrical machinery industry and the automobile industry.

### Reference Signs List

100 Coin-type secondary battery
101 Top cap
111 Positive electrode
112 Spacer
113 SUS spring
114 Glass filter
102 Cell can
121 Negative electrode
122 Packing
103 Electrolyte solution
104 Separator

## Claims

1. A lithium ion secondary battery negative electrode active material that is a composite with silicon particles being dispersed in a matrix whose main phase is a lithium aluminosilicate having a three-dimensional network structure,
**characterized in that**
the lithium aluminosilicate is represented by the following general formula (1):
[Chemical formula 1]
LiAlₓSi_{y}O_{1/2 + 3x/2 + 2y + δ} · · · (1)
, wherein in the general formula (1), x satisfies 0.4≤x≤2.5, y satisfies 0.4≤y≤6.8, and δ satisfies -0.4≤δ≤0.4.

2. The lithium ion secondary battery negative electrode active material according to claim 1, wherein
in the general formula (1), a ratio (y/x) which is a ratio between Si and Al is in a range of 1.0≤(y/x)≤5.5.

3. The lithium ion secondary battery negative electrode active material according to claim 1 or 2, wherein
the lithium aluminosilicate is at least one selected from LiAlSiO₄, LiAlSi₂O₆, and LiAlSi₃O₈.

4. The lithium ion secondary battery negative electrode active material according to any one of claims 1 to 3, wherein
in a crystal structure analysis conducted by an X-ray diffraction method specified in JIS H7805:2005, the lithium aluminosilicate has peaks of 28.20 to 28.60, 47.10 to 47.50, and 55.90 to 56.30 as diffraction peaks 2θ (deg) attributable to silicon; and peaks of 25.10 to 25.90, 47.10 to 47.90, and 55.80 to 56.80 as diffraction peaks 2θ (deg) attributable to lithium aluminosilicate.

5. The lithium ion secondary battery negative electrode active material according to any one of claims 1 to 4, wherein
the silicon particles are contained in the lithium ion secondary battery negative electrode active material at a ratio of 40 to 90% by mass.

6. The lithium ion secondary battery negative electrode active material according to any one of claims 1 to 5, wherein
the silicon particles have an average particle size of 5 to 100 nm.

7. A method for producing a lithium ion secondary battery negative electrode active material with silicon particles being dispersed in a matrix that contains a lithium aluminosilicate, comprising:
a step (I) of producing a lithium aluminosilicate having a three-dimensional network structure by mixing and crushing lithium carbonate, aluminum hydroxide, and silicon dioxide, and then by performing sintering at a temperature of 800 to 1,000°C under an atmospheric pressure atmosphere;
a step (II) of producing a negative electrode active material precursor by mixing and crushing the lithium aluminosilicate produced in the step (I) and silicon particles; and
a step (III) of sintering the negative electrode active material precursor produced in the step (II) under an inert gas atmosphere,
wherein the lithium aluminosilicate is represented by the following general formula (1):
[Chemical formula 2]
LiAlₓSi_{y}O_{1/2 + 3x/2 + 2y + δ} · · · (1)
, wherein in the general formula (1), x satisfies 0.4≤x≤2.5, y satisfies 0.4≤y≤6.8, and δ satisfies -0.4≤δ≤0.4.

8. A lithium ion secondary battery negative electrode comprising the lithium ion secondary battery negative electrode active material according to any one of claims 1 to 6.
